(19) Europäisches Patentamt
European Patent Office
Office européen des brevets

(11) EP 3 557 012 A1

(12) **EUROPEAN PATENT APPLICATION**

(43) Date of publication:
23.10.2019 Bulletin 2019/43

(51) Int Cl.:
F01L 3/06 (2006.01)          F02F 1/24 (2006.01)
F02F 1/42 (2006.01)

(21) Application number: 19167403.5

(22) Date of filing: 04.04.2019

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 18.04.2018 JP 2018080142

(71) Applicant: TOYOTA JIDOSHA KABUSHIKI KAISHA
Toyota-shi, Aichi-ken 471 8571 (JP)

(72) Inventors:
• HOTTA, Shintaro
  Aichi-ken, 471-8571 (JP)
• SAKAI, Hiroyuki
  Aichi-ken, 471-8571 (JP)

(74) Representative: J A Kemp
14 South Square
Gray's Inn
London WC1R 5JJ (GB)

(54) **CYLINDER HEAD OF INTERNAL COMBUSTION ENGINE**

(57) An internal combustion engine 1 comprising: an intake opening 13; an exhaust opening 14; and a mask part 50 having a wall surface 51 extending toward the inside of the combustion chamber 7 along an outer periphery of the intake opening at an opposite side from the exhaust opening side. The wall surface of the mask part is formed so that a clearance from a passage surface of an edge part of the intake valve at an edge part at the lift direction side is greater than the clearance at the edge part at the opposite lift direction side, and so that between the edge part at the lift direction side and the edge part at the opposite lift direction side, the clearance is a value between the clearance at the edge part at the lift direction side and the clearance at the edge part at the opposite lift direction side.

FIG. 1

EP 3 557 012 A1

**Description**

FIELD

The present invention relates to a cylinder head of an internal combustion engine.

BACKGROUND

In the past, it has been proposed to provide mask parts around intake openings opened and closed by intake valves (for example, Japanese Patent Publication No. 2011-132833 A and Japanese Patent Publication No. S63-113117 A). The mask parts are provided with wall surfaces formed so as to extend along the outer peripheries of the intake openings toward the inside of the combustion chamber, at the opposite sides to the exhaust opening sides (below, referred to as the "opposite exhaust opening sides").

The wall surfaces of such mask parts function as flow resistances against the intake gas taken in from the intake ports into the combustion chamber, when the intake valves are lifted. The intake gas passing through regions positioned at the opposite exhaust opening sides of the intake openings is thereby prohibited or inhibited from flowing into the combustion chamber. As a result, a reverse tumble flow is kept from being generated in the combustion chamber and a strong normal tumble flow is formed in the combustion chamber.

SUMMARY

[TECHNICAL PROBLEM]

In this regard, from the viewpoint of suppression of reverse tumble flow, the clearance between the wall surface of the mask part and the edge part of the intake valve is preferably small. However, on the other hand, if this clearance is smaller, the intake gas amount flowing from the region of the intake valve at the mask part side into the combustion chamber is smaller, at the time of maximum lift of the intake valve. Therefore, when the intake air amount to the combustion chamber is large, when the intake gas passes around the intake valve at the region at the opposite side to the mask part side, choking occurs in the intake gas. At this time, the intake gas amount taken into the combustion chamber is smaller, and as a result the disturbance of the intake gas occurring in the combustion chamber is smaller.

If the disturbance of the intake gas occurring in a combustion chamber is smaller, it is harder for the fuel to mix with the air, and therefore the duration of combustion of the air-fuel mixture is longer. As the duration of combustion is longer, the degree of the constant volume at the combustion occurring in the combustion chamber is decreased, and accordingly a deterioration of the fuel efficiency is deteriorated or the output power is dropped.

The present invention was made in consideration of the above problem and has as its object to provide an internal combustion engine configured so that when the intake air amount to the combustion chamber is great, the disturbance of the intake gas occurring in the combustion chamber is greater.

[SOLUTION TO PROBLEM]

The present invention was made so as to solve the above problem and has as its gist the following.

[1] An internal combustion engine comprising:

an intake opening facing a combustion chamber and opened and closed by an intake valve;
an exhaust opening facing the combustion chamber and opened and closed by an exhaust valve; and
a mask part having a wall surface extending toward the inside of the combustion chamber along an outer periphery of the intake opening at an opposite side from the exhaust opening side in the direction extending through the center of an entire of the intake opening and the center of an entire of the exhaust opening,
wherein the wall surface of the mask part is formed so that a clearance from a passage surface of an edge part of the intake valve at an edge part of the wall surface at the lift direction side of the intake valve is greater than the clearance at the edge part of the wall surface at the opposite lift direction side of the intake valve, and so that between the edge part of the wall surface at the lift direction side and the edge part of the wall surface at the opposite lift direction side, the clearance is a value between the clearance at the edge part at the lift direction side and the clearance at the edge part at the opposite lift direction side.

[2] The internal combustion engine according to above [1], wherein the wall surface is, at least at part at the axial direction of the intake valve, formed in a tapered shape where the clearance becomes gradually larger toward the lift direction of the intake valve.

[3] The internal combustion engine according to above [2], wherein the wall surface is formed so as to extend in parallel with an axis of the intake valve at part of a region in the opposite lift direction side of the intake valve and is formed in a tapered shape so that the clearance becomes gradually greater toward the lift direction of the intake valve at the remaining region in the lift direction side of the intake valve.

[4] The internal combustion engine according to above [1], wherein the wall surface is formed so that the clearance becomes larger in a step-wise manner toward the lift direction of the intake valve.

[5] The internal combustion engine according to any one of above [1] to [4], further comprising a cylinder head in which the intake opening, the exhaust opening, and the mask part are formed, and

wherein the edge part of the wall surface the furthest at the lift direction side of the intake valve is positioned on a surface of the cylinder head abutting against a cylinder block.

[6] The internal combustion engine according to any one of above [1] to [5], wherein the wall surface is formed so that the clearance is constant in the circumferential direction at different positions in the lift direction of the intake valve.

[7] The internal combustion engine according to any one of above [1] to [6], wherein at the wall surface, the clearance at the edge part of the lift direction side of the intake valve is equal to or greater than 1.8 mm, and the clearance at the edge part of the opposite lift direction of the intake valve is less than 1.8 mm.

[8] The internal combustion engine according to any one of above [1] to [6], wherein the wall surface is configured so that the clearance at the edge part at the lift direction side of the intake valve is equal to or greater than Cl calculated by the following formula (1), and the clearance at the edge part at the opposite lift direction of the intake valve is less than Cl calculated by the following formula (1):

$$Cl=-(h \cdot NEm + j \cdot Pmm + f)/2n - 0.8 \qquad \ldots (1)$$

in which formula (1), NEm is a rotational speed (rpm) at a maximum output power point, Pmm is an internal cylinder pressure (kPa) at the maximum output power point, h=0.0000788, j=-0.003585, f=0.6531914, and n=-0.0621023.

[ADVANTAGEOUS EFFECTS OF INVENTION]

According to the present invention, there is provided an internal combustion engine configured so that when the intake air amount to the combustion chamber is great, the disturbance of the intake gas occurring inside the combustion chamber becomes greater.

BRIEF DESCRIPTION OF DRAWINGS

FIG. 1 is a partial cross-sectional view schematically showing an internal combustion engine according to first embodiment.
FIG. 2 is a top view schematically showing a top surface of one combustion chamber.
FIG. 3 is an enlarged cross-sectional view showing enlargedly a vicinity of the intake opening of FIG. 1.
FIG. 4 shows the transitions, with respect to crank angle, in the tumble ratio of the tumble flow generated in each combustion chamber and the lift amount of the intake valve.
FIGS. 5A to 5C are views schematically showing a flow of intake gas formed in a combustion chamber at around 270°BTDC.
FIG. 6 is a view showing a relationship between a clearance of a wall surface from a passage surface of an edge part of an intake valve and a strength of disturbance occurring in a combustion chamber.
FIG. 7 is an enlarged cross-sectional view similar to FIG. 3, showing a vicinity of an intake opening enlarged.
FIG. 8 is an enlarged cross-sectional view similar to FIG. 3, showing a vicinity of an intake opening enlarged.

DESCRIPTION OF EMBODIMENTS

Below, referring to the drawings, embodiments of the present invention will be explained in detail. Note that in the following explanation, similar components are assigned the same reference notations.

First Embodiment

Explanation of Entire Internal Combustion Engine

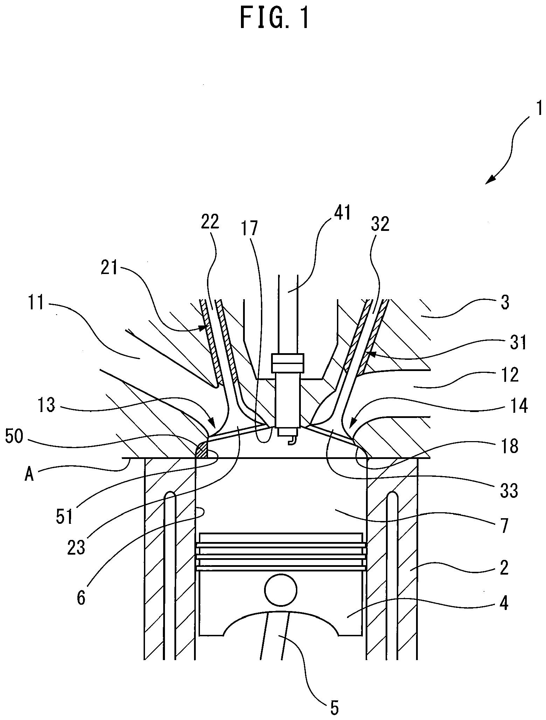

FIG. 1 is a partial cross-sectional view schematically showing the internal combustion engine according to first embodiment. As shown in FIG. 1, the internal combustion engine 1 is provided with a cylinder block 2, a cylinder head 3, pistons 4, and a connecting rod 5.

The cylinder block 2 is provided with a plurality of cylinders 6 arranged aligned. The cylinder head 3 is arranged so as to abut against the cylinder block 2 at an abutting surface A and is arranged so as to close off first openings of the cylinders 6 formed at the cylinder block 2.

Each piston 4 is arranged so as to reciprocate through the inside of a cylinder 6 formed in the cylinder block 2. The piston 4 is connected through a piston pin to the connecting rod 5. The connecting rod 5 is connected through a crank pin to a crankshaft (not shown), and acts to convert the reciprocating motion of the piston 4 to rotary motion of the crankshaft. Further, the wall surface of a cylinder 6 of the cylinder block 2, the cylinder head 3 and piston 4 form a combustion chamber 7 in which the air-fuel mixture is burned.

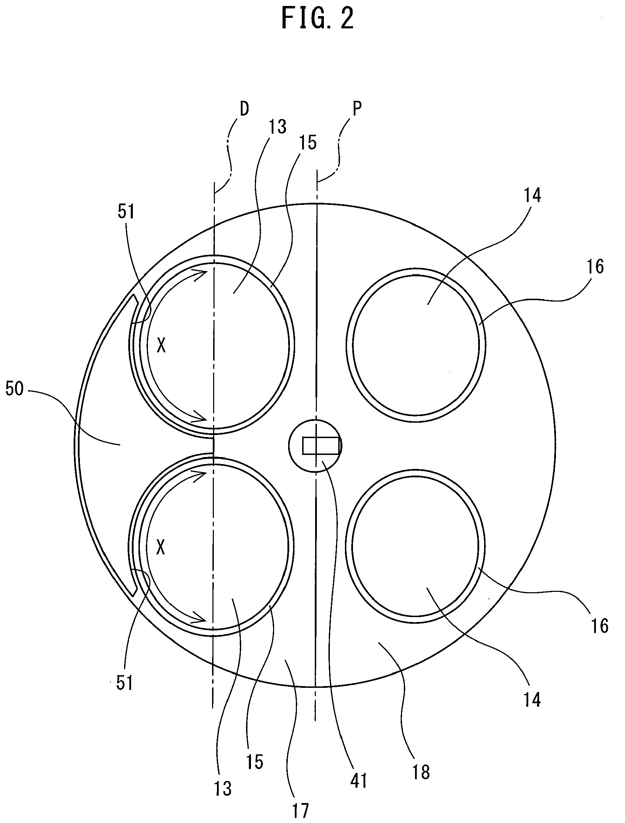

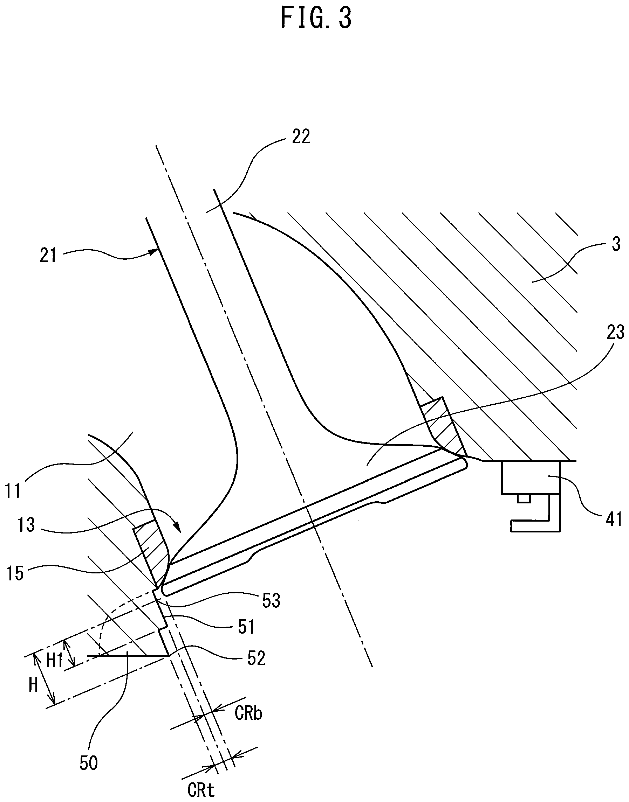

FIG. 2 is a top view schematically showing the top surface of one combustion chamber 7. Therefore, FIG. 2 schematically shows the bottom surface of the cylinder head 3 positioned so as to close one cylinder 6. FIG. 3 is an enlarged cross-sectional view showing enlargedly a vicinity of the intake opening of FIG. 1.

As shown in FIG. 1, the cylinder head 3 is formed with intake ports 11 and exhaust ports 12. As shown in FIGS 1 and 2, the intake ports 11 face the combustion chambers 7, and communicate with the combustion chambers 7 through intake openings 13 formed at the cylinder head 3. Similarly, the exhaust ports 22 face the combustion chambers 16, and communicate with the combustion chambers 16 through exhaust openings 24 formed at the cylinder head 12.

As shown in FIG. 2, in the present embodiment, at each combustion chamber 7, two intake openings 13 and two exhaust openings 14 are provided. The two intake openings 13 are arranged aligned in the same direction as the direction which the plurality of cylinders 6 are aligned (below, referred to as the "cylinder arrangement direction"). Similarly, the two exhaust openings 14 are arranged aligned in the same direction as the cylinder arrangement direction. The two intake openings 13 are arranged at one side of the center plane P extending through the center of the cylinder 6 and extending in the cylinder arrangement direction, while the two exhaust openings 14 are arranged at the other side.

Note that, in this Specification, the direction extending through the center of an entire of the intake openings and the center of an entire of the exhaust openings (in this embodiment, the direction perpendicular to the cylinder arrangement direction) and heading from the center plane P to the intake openings 13, that is, the direction from the exhaust openings 14 toward the intake openings 13, will be referred to as the "opposite exhaust opening side" or "opposite exhaust opening direction", while the direction perpendicular to the cylinder arrangement direction and heading from the center plane P to the exhaust openings 14, that is, the direction from the intake openings 13 toward the exhaust openings 14, will be referred to as the "exhaust opening side" or "exhaust opening direction". Note that, if a plurality of the intake openings 13 are provided in the engine, the center of the entire of the intake openings 13 means the center of barycenters of the intake openings 13. Similarly, if a plurality of the exhaust openings 14 are provided in the engine, the center of the entire of the exhaust openings 14 means the center of barycenters of the exhaust openings 14.

Further, as shown in FIG. 2, intake seat parts 15, at which the intake valves 21 (explained later) abut at the time of valve closure, are provided over the entire circumferences around the edge parts of the intake openings 13. Similarly, exhaust seat parts 16, at which the exhaust valves 31 (explained later) abut at the time of valve closure, are provided over the entire circumferences around the edge parts of the exhaust openings 14. The intake seat parts 15 may be formed as valve seats separate from the cylinder head 3 as shown in FIG. 3 or may be seats directly formed at the cylinder head 3.

As shown in FIG. 1, the cylinder head 3 is formed so that the top surface of each combustion chamber 7 has two slanted surfaces of the intake side slanted surface 17 and the exhaust side slanted surface 18. The intake side slanted surface 17 is formed so that the height from the abutting surface A (length from abutting surface A in axial direction of cylinder 6) becomes higher from the edge part of the intake opening side toward the center plane P. The exhaust side slanted surface 18 is formed so that the height from the abutting surface A becomes higher from the edge part of the exhaust opening side toward the center plane P. Therefore, the top surface of the combustion chamber 7 is slanted so as to become highest at the center plane P. Note that the top surface of the combustion chamber 7 may not necessarily formed so as to be highest at the center plane P, as long as the top surface includes a slanted surface in which the height becomes higher from the intake opening side toward the center and a slated surface in which the height becomes higher from the exhaust opening side toward the center.

Further, the cylinder head 3 is provided with intake valves 21 opening and closing the intake openings 13, exhaust valves 31 opening and closing the exhaust openings 14, and spark plugs 41 igniting an air-fuel mixture in the combustion chambers 7,. Further, the cylinder head 3 is provided with fuel injector (not shown) injecting fuel into the intake port 11.

Each intake valve 21 is provided with a valve stem 22 and a valve head 23 fixed to one end of the valve stem 22. The intake valve 21 is arranged in the cylinder head 3 to be able to slide in the direction in which the valve stem 22 extends, that is, the axial direction of the intake valve 21. The intake valve 21 is lifted in its axial direction by an intake valve operating mechanism (not shown). The intake valve operating mechanism may be a variable valve operating mechanism able to change at least one of an operating angle, phase angle, and maximum amount of lift of the intake valve 21, or may be a valve operating mechanism unable to change these.

Similarly, each exhaust valve 31 is provided with a valve stem 32 and a valve head 33 fixed to one end of the valve stem 32. The exhaust valve 31 is arranged in the cylinder head 3 to be able to slide in the direction in which the valve stem 32 extends, that is, the axial direction of the exhaust valve 31. The exhaust valve 31 is lifted in the axial direction by the exhaust valve operating mechanism (not shown). The exhaust valve operating mechanism may be a variable valve operating mechanism able to change at least one of an operating angle, phase angle, and maximum lift of the exhaust valve 31, or may be a valve operating mechanism unable to change these.

Each spark plug 41 is attached to the cylinder head 3 so as to be positioned at the top surface of a combustion chamber 7 at the substantial center of the combustion chamber 7.

Note that, in the present embodiment, a fuel injector injecting fuel into the intake port 11 is provided, but it is also possible to provide a fuel injector directly injecting fuel into the combustion chamber 7 at the cylinder head 3, instead of this fuel injector or in addition to this fuel injector. In this case, the fuel injector is disposed so that its injection nozzle is positioned in proximity to the spark plug 41 or is positioned between two intake openings 23 at the opposite exhaust opening side from the intake opening 23.

Further, in the present embodiment, the spark plug 41 is provided so as to be exposed in the combustion chamber 16, but the spark plug 41 need not be provided. In this case, the fuel injection from a fuel injector directly injecting fuel into the combustion chamber 16 is controlled so that the air-fuel mixture self-ignites at the combustion chamber 16.

Configuration of Mask Part

As shown in FIGS. 1 to 3, the cylinder head 3 of the present embodiment is provided with a mask part 50 provided at an opposite exhaust opening side of the intake opening 13. The mask part 50 is formed so as to project from the top surface of a combustion chamber 7 toward the inside of the combustion chamber 7. The mask part 50 may be formed integrally with the cylinder head 3 or may be formed as a separate member from the cylinder head 3.

The mask part 50 has a wall surface 51 extending along the outer periphery of an intake opening 13 and along the outer edge of the intake seat part 15 around the intake opening 13. In particular, the wall surface 51 is formed so as to extend entirely or in part at the inside of the region at the opposite exhaust opening side from the center plane D extending in the cylinder array direction of the intake opening 13 (region shown by X in FIG. 2). That is, the wall surface 51 extends along the outer periphery of the intake opening 13 toward the inside of the combustion chamber 7 at the opposite exhaust opening side. The wall surface 51 is preferably formed so as to extend over a region equal to or greater than half of the region shown by X in FIG. 2.

Further, the wall surface 51 extends from near the outer periphery of the intake opening 13 toward the inside of the combustion chamber 7. In the present embodiment, the wall surface 51 extends in the lift direction of the intake valve 21 up to the abutting surface A of the cylinder head 3. Therefore, the edge part 52 of the wall surface 51 in the lift direction of the intake valve 21 (below, also referred to as the "lift direction side edge part") is positioned on the abutting surface A of the cylinder head 3. The wall surface 51 extending up to the abutting surface A in this way means the mask part 50 projects out toward the inside of the combustion chamber 7 to the abutting surface A. By the mask part 50 projecting out to the abutting surface A in this way, the mask part 50 will not project out from the abutting surface A of the cylinder head and accordingly the cylinder head 3 can be easily assembled with the cylinder block 2.

Note that, the wall surface 51 does not necessarily extend up to the abutting surface A of the cylinder head 3 in the lift direction of the intake valve 21. Therefore, the wall surface 51 may be formed so that the height of the intake valve 21 in the lift direction (axial direction) at least partially is lower than the height reaching the abutting surface A of the cylinder head 3. In this case, the wall surface 51, for example, is formed so as to extend up to the abutting surface A in the region positioned at the most opposite exhaust opening side of the intake opening 13 and to not extend up to the abutting surface A in the region positioned at the cylinder array direction side of the intake opening 13. Further, the wall surface 51 may also be formed so as to extend beyond the abutting surface A toward the inside of the combustion chamber 7, although it becomes difficult to assemble the cylinder head 3 at the cylinder block 2.

Further, in the present embodiment, the wall surface 51 of the mask part 50 is formed so that the clearance CR from the passage surface of the edge part of the intake valve 21 is changed in the lifting direction of the intake valve 21. Note that, the passage surface of the edge part of the intake valve 21 means the surface through which the edge part of the valve body passes 23 when the valve body 23 of the intake valve 21 moves in the axial direction of the intake valve 31 due to the intake valve 31 being lifted.

In the present embodiment, the wall surface 51 is configured so that a clearance CRt from a passage surface of an edge part of the intake valve 21 at a lift direction side edge part 52 is larger than a clearance CRb from the passage surface of the edge part of the intake valve 21 at the edge part 53 (below, also referred to as the "opposite lift direction side edge part") of the wall surface 51 at the opposite direction from the lift direction of the intake valve 21 (below, also referred to as the "opposite lift direction"). Note that, in the present description, as will be understood from FIG. 3, the part of the wall surface 51 positioned on the outer surface of the intake valve 21 at the time of closing of the intake valve 21 will be referred to as the "opposite lift direction side edge part 53 of the wall surface 51".

In particular, in the present embodiment, the wall surface 51 is formed so that the clearance from the passage surface of the edge part of the intake valve 21 changes in two stages toward the lift direction of the intake valve 21 (the clearance becomes larger toward the lift direction). Therefore, the wall surface 51 is formed so that, from the opposite lift direction side edge part 53 to half or so (H1) of the height H of the wall surface 51, the clearance CR is a relatively small value CRb, while over HI, the clearance CR is a relatively large value CRt.

Specifically, in the present embodiment, the clearance CRb at the opposite lift direction side edge part 53 of the wall surface 51 is 1.0 mm, while the clearance CRt at the lift direction side edge part 52 of the wall surface 51 is 2.6 mm. However, if the clearance CRb at the opposite lift direction side edge part 53 of the wall surface 51 is less than 1.8 mm and the clearance CRt at the lift direction side edge part 52 of the wall surface 51 is 1.8 mm to 3.4 mm, the clearances CRb and CRt may also be values different from the above.

On the other hand, the clearances CR are formed so as to be constant in the circumferential direction of the intake opening 13 at different positions in the lift direction of the intake valve 21. Therefore, the wall surface 51 is formed to an arc shape centered on the axis of the intake valve 21 at the different positions in the lift direction of the intake valve 21.

Note that, in the present embodiment, the wall surface 51 is formed so that the clearance from the passage surface of the edge part of the intake valve 21 changes in two stages so that a step is formed at the center in the height direction. However, the wall surface 51 may also be formed in three stages or a greater number of stages as long as the clearance from the passage surface of the edge part of the intake valve 21 is greater in stages toward the lift direction of the intake valve 21. In this case as well, the clearance CRb at the opposite lift direction side edge part 53 of the wall surface 51 is less than 1.8 mm, while the clearance CRt at the lift direction side edge part 52 of the wall surface 51 is 1.8 mm to 3.4 mm.

Alternatively, in the present embodiment, the mask part 50 is configured so that the clearance CRb at the opposite lift direction side edge part 53 of the wall surface 51 is less than Cl calculated by the following formula (1), while the clearance CRt at the lift direction side edge part 52 of the wall surface 51 is equal to or greater than Cl calculated by the following formula (1) and equal to or less than Ch calculated by the following formula (2):

$$Cl = -(h \cdot NEm + j \cdot Pm + f)/2n - 0.8 \qquad …(1)$$

$$Ch = -(h \cdot NEm + j \cdot Pm + f)/2n + 0.8 \qquad …(2)$$

In this regard, in the above formulas (1) and (2), NEm is the rotational speed (rpm) at the maximum output power point, Pm is the pressure in the intake port 11 or the intake runners 61 at the maximum output power point (intake pipe pressure) (kPa), h=0.0000788, j=-0.003585, f=0.6531914, and n=-0.0621023.

Action and Effects

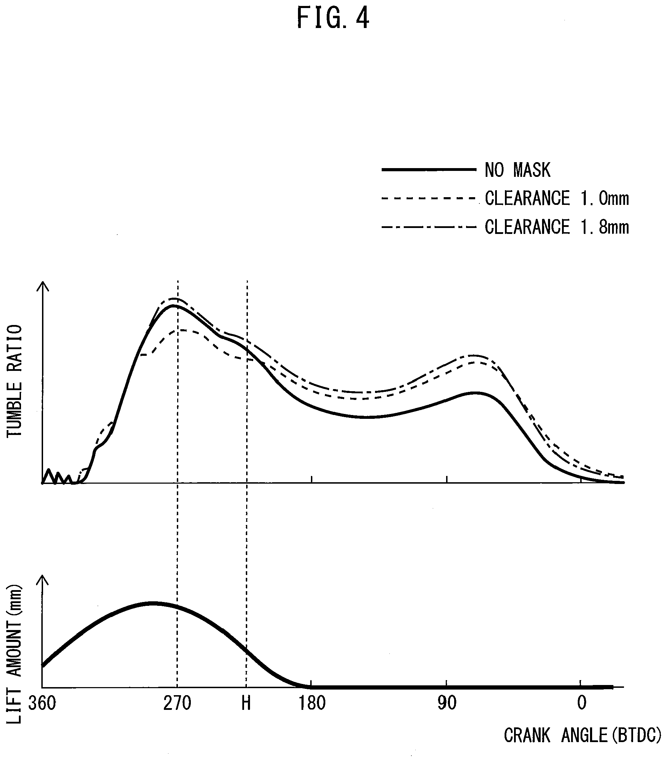

Next, referring to FIGS. 4 to 5, the action and effects in the present embodiment will be explained. FIG. 4 shows the transitions, with respect to crank angle, in the tumble ratio of the tumble flow generated in each combustion chamber and the lift amount of the intake valve 21. The abscissa of FIG. 4 shows the angle at the advanced side from compression top dead center. Therefore, 0°BTDC of FIG. 4 shows the state where the piston 4 is at compression top dead center, while 180°BTDC shows the state where the piston 4 is at suction bottom dead center. In particular, FIG. 4 shows the transitions, with respect to crank angle, in the tumble ratio at the operating state where the output of the internal combustion engine is maximum (maximum output power point).

Further, the solid line in the figure shows the transition in the case where the cylinder head 3 is not provided with a mask part. On the other hand, the broken line and one-dot chain line in the figure show the transitions in the case where the clearance CR of the wall surface 51 is 1.0 mm and 1.8 mm over the entire height direction (therefore, a step difference is not provided), respectively. Further, FIG. 4 shows the transitions in the case where the height of the wall surface 51 of the mask part is H.

If the intake stroke is started from 360°BTDC, as shown in FIG. 4, the lift amount of the intake valve 21 increases, and along with this intake gas flows into the combustion chamber 7. At the time of start of the intake stroke, the amount of flow of the intake gas flowing into the the combustion chamber 7 does not become that great, therefore no tumble flow is formed in the combustion chamber 7, and therefore the tumble ratio remains low. After that, if the lift amount of the intake valve 21 increases and the speed of descent of the piston 4 rises, the amount of flow of intake gas flowing into the combustion chamber 7 also increases and the tumble ratio of the tumble flow formed in the combustion chamber 7 also becomes greater. Further, at 270°BTDC, the speed of descent of the piston 4 becomes maximum, and along with this the tumble ratio of the tumble flow formed in the combustion chamber 7 also becomes maximum.

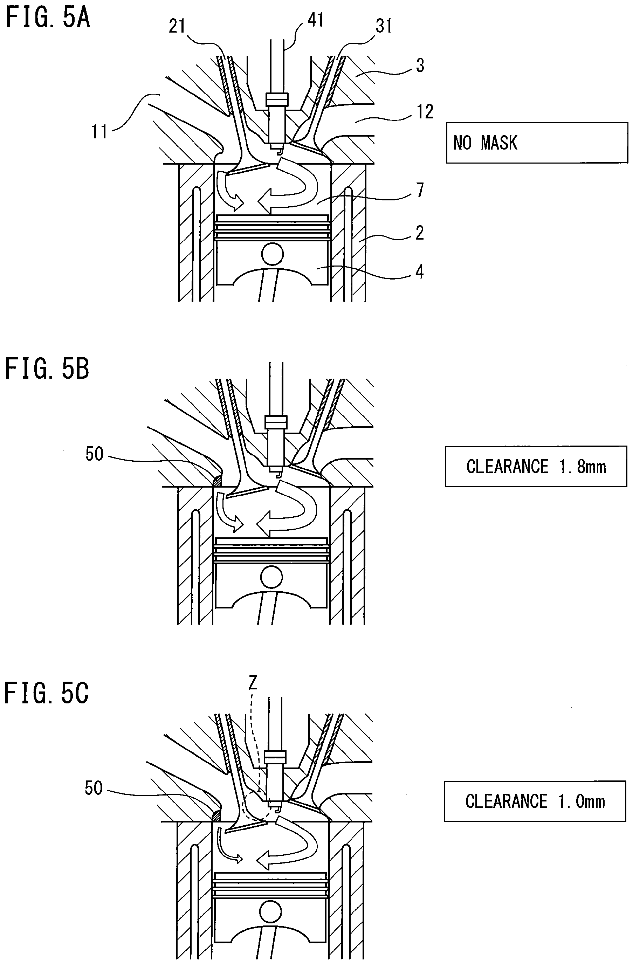

As will be understood from FIG. 4, near 270°BTDC, the tumble ratio in the case where a mask part with a clearance of 1.0 mm is provided, is smaller compared with the tumble ratio in the case where the mask part is not provided and the case where a mask part with a clearance of 1.8 mm is provided. Below, referring to, FIGS. 5A to 5C, the reason why the tumble ratio of the tumble flow is small in the case where a mask part with a clearance of 1.0 mm is provided will be explained.

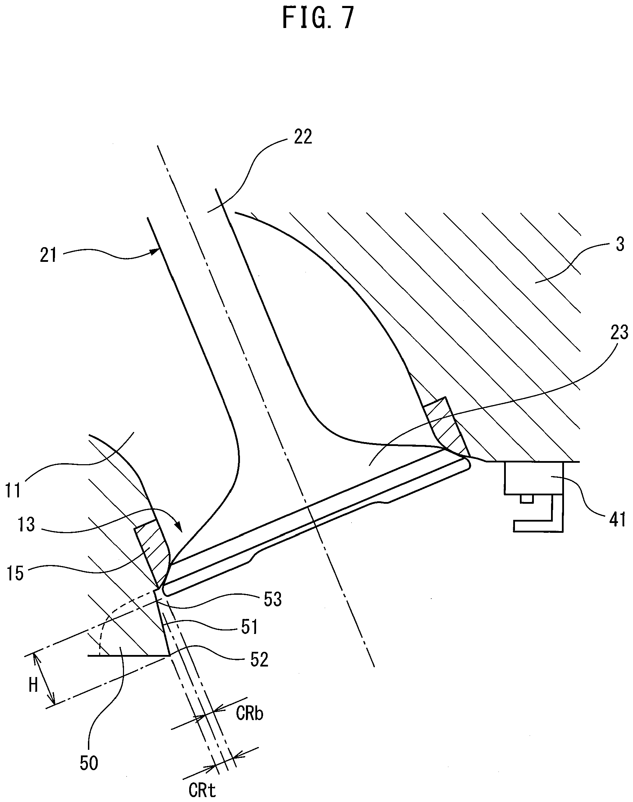

FIGS. 5A to 5C are views schematically showing the flow of intake gas formed in the combustion chamber 7 around 270°BTDC. FIG. 7A shows the case where no mask part is provided, FIG. 5B shows the case where a mask part with a clearance of 1.8 mm is provided, and FIG. 5C shows the case where a mask part with a clearance of 1.0 mm is provided.

In the case where no mask part is provided as shown in FIG. 5A, and in the case where a mask part with a clearance of 1.8 mm is provided as shown in FIG. 5B, when the lift amount of the intake valve 21 is large, the resistance to the intake gas is not that large even in the region at the opposite exhaust opening side of the intake opening 13. Therefore, in these cases, the intake gas flows into the combustion chamber 7 not only through the region at the exhaust opening side of the intake opening 13, but also the region at the opposite exhaust opening side. That is, the actual flow area when the intake gas flows into the combustion chamber 7 through the intake opening 13 is broad. As a result, the overall flow rate of the intake gas flowing into the combustion chamber 7 is relatively fast and accordingly the tumble ratio of the tumble flow formed in the combustion chamber 7 is larger.

On the other hand, in the case where a mask part with a clearance of 1.0 mm is provided as shown in FIG. 5C, the resistance to the intake gas at the region at the opposite exhaust opening side of the intake opening 13 is large. Therefore, in this case, the intake gas almost entirely flows through the region of the intake opening 13 at the exhaust opening side. The intake gas flowing through the region at the opposite exhaust opening side is small. That is, the actual flow area when the intake gas flows through the intake opening 13 into the combustion chamber 7 is narrower compared with the case shown in FIGS. 5A and 5B. In addition, the actual flow area of the intake opening 13 is narrow and almost all of the intake gas flows through the region Z at the exhaust opening side of the intake opening 13, therefore the amount of flow of the intake gas trying to flow through this region Z increases, and as a result choking occurs in this region Z. Therefore, in this case, the overall flow rate of the intake gas flowing into the combustion chamber 7 is slower than the cases shown in FIG. 5A or 5B and accordingly the tumble ratio of the tumble flow formed in the combustion chamber 7 is also small.

On the other hand, as will be understood from FIG. 4, after the lift amount of the intake valve 21 falls and reaches near the height H of the wall surface 51 of the mask part, if no mask part is provided, the tumble ratio of the tumble flow rapidly falls. This is because the intake gas flowing in from the region at the opposite exhaust opening side of the intake opening 13 flows in in a direction reverse to the direction of the tumble flow (below, also referred to as the "reverse tumble direction"), and thus obstructs the flow of the tumble flow.

On the other hand, if a mask part with a clearance of 1.0 mm is provided, if the lift amount of the intake valve 21 falls to equal to or less than the height H, it is possible to suppress the inflow of intake gas from the region at the opposite exhaust opening side of the intake opening 13. Therefore, if a mask part with a clearance of 1.0 mm is provided, when the lift amount of the intake valve 21 falls to equal to or less than the height H, it is possible to suppress the inflow of the intake gas in the reverse tumble direction and accordingly, as shown in FIG. 4, it is possible to suppress the drop in the tumble ratio. In the case where a mask part with a clearance of 1.8 mm is provided, the extent of drop of the tumble ratio when the lift amount of the intake valve 21 falls to equal to or less than the height H, is an extent between the case where no mask part is provided and the case where a mask part with a clearance of 1.0 mm is provided.

Therefore, in the region where the lift amount of the intake valve 21 is large, that is, when the descent speed of the piston 4 is fast, by making the clearance of the mask part greater, it is possible to heighten the strength of disturbance in the combustion chamber 7 at the timing when the air-fuel mixture is finally ignited (30°BTDC to 0°BTDC). On the other hand, in the region where the lift amount of the intake valve 21 is small, by making the clearance of the mask part smaller, it is possible to heighten the strength of disturbance in the combustion chamber 7 at the timing when the air-fuel mixture is ignited.

As explained above, in the present embodiment, the wall surface 51 of the mask part 50 is formed so that the clearance CRt at the lift direction side edge part 52 is larger than the clearance CRb at the opposite lift direction side edge part 53. Therefore, when the lift amount of the intake valve 21 is large, since the clearance CRt at the lift direction side edge part 52 is large, it is possible to increase the amount of flow of intake gas flowing into the combustion chamber 7. On the other hand, when the lift amount of the intake valve 21 is small, since the clearance CRb at the opposite lift direction side edge part 53 is small, it is possible to decrease the amount of flow of the intake gas flowing in the reverse tumble direction. As a result, according to the present embodiment, it is possible to heighten the tumble ratio at the timing when the air-fuel mixture is ignited.

If the tumble ratio is high in this way, the disturbance of the air-fuel mixture in the combustion chamber 7 is great, and therefore the combustion period of the air-fuel mixture is short. If the combustion period of the air-fuel mixture is short, the constant volume degree of combustion occurring in the combustion chamber is higher and accordingly the fuel efficiency and output power can be made higher. Therefore, according to the present embodiment, in particular in an operating state (maximum output power point) where the output of the internal combustion engine becomes maximum, the fuel efficiency and output can be made high.

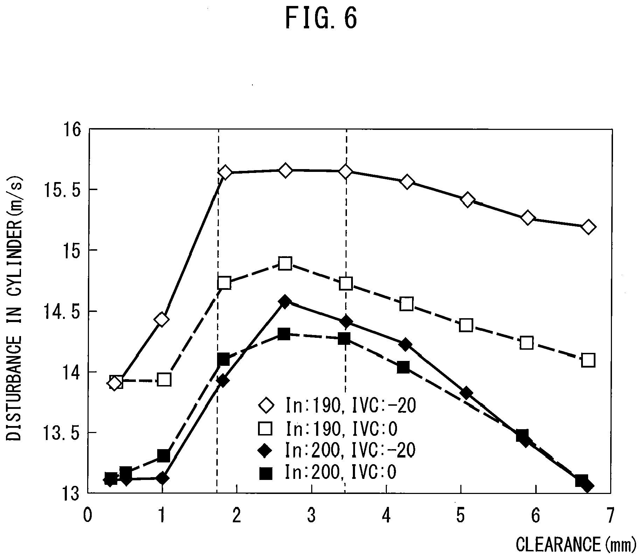

Next, referring to FIG. 6, a concrete value of the clearance will be explained. FIG. 6 is a views showing the relationship between the clearance CR of the wall surface 51 from the passage surface of the edge part of the intake valve 21 and the strength of the disturbance generated in the combustion chamber 7. FIG. 6 shows the relationship in the maximum output power point. Further, FIG. 6 shows the case where the clearance is constant in the lift direction of the intake valve 21.

Note that, the relationship between the clearance CR and the strength of disturbance shown in FIG. 6 is the relationship in an internal combustion engine 1 of the following specifications. That is, in this internal combustion engine 1, the stroke/bore ratio is 1.14 to 1.17, the angle $\alpha$ between the intake valve 21 and the axis of the cylinder 6 is 18°, the angle $\beta$ between the exhaust valve 31 and the axis of the cylinder 6 is 23° (see FIG. 2), and the intake port TTR (tumble ratio) is 2.6 to 2.8. The intake port TTR is a variable which changes in accordance with the shape of the intake port 11. Specifically, this means the tumble ratio of the tumble flow formed in the combustion chamber 7 when setting the lift amount L of the intake valve 21 to L/D=0.3 (D is the valve diameter of the intake valve 21) and sucking intake gas into the combustion chamber 7 by -30 kPa.

Further, the engine rotational speed at the maximum output power point of this internal combustion engine 1 is 5600 rpm, while the pressure in the intake port 11 or intake runner 61 at the maximum output power point (intake pipe pressure or supercharging pressure) is 200 kPa. Therefore, FIG. 6 shows the relationship when the engine rotational speed is 5600 rpm and the supercharging pressure is 200 kPa.

Further, in FIG. 6, the white diamond shapes show the case where the operating angle of the intake valve 21 is 190° and the closing timing of the intake valve 21 is 20° to the advanced side from suction bottom dead center (-20°ABDC). Further, the white square shapes show the case where the operating angle of the intake valve 21 is 190° and the closing timing of the intake valve 21 is suction bottom dead center (0°ABDC). The black diamond shapes show the case where the operating angle of the intake valve 21 is 200° and the closing timing of the intake valve 21 is 20° to the advanced side from suction bottom dead center (-20°ABDC). Further, the black square shapes show the case where the operating angle of the intake valve 21 is 200° and the closing timing of the intake valve 21 is suction bottom dead center (0°ABDC).

As will be understood from FIG. 6, the strength of the disturbance generated in a combustion chamber 7 at the maximum output power point is maximum when the clearance CR of the wall surface 51 is 2.6 mm or so, regardless of the operating angle or closing timing of the intake valve 31. Therefore, in an internal combustion engine of the above specifications where the engine speed is 5600 rpm and the supercharging pressure is 200 kPa at the maximum output power point, the strength of disturbance becomes maximum when the clearance CR of the wall surface 51 is 2.6 mm or so.

Further, as will be understood from FIG. 6, it will be understood that the strength of the disturbance generated in a combustion chamber 7 at the maximum output power point is a relatively large value in the range of clearance CR of the wall surface 51 of 1.8 mm to 3.4 mm, regardless of the operating angle or closing timing of the intake valve 21. Therefore, in an internal combustion engine 1 of the above specifications where the engine speed is 5600 rpm and the supercharging pressure is 200 kPa at the maximum output power point, the clearance CR of the wall surface 51 is preferably set to 1.8 mm to 3.4 mm, more preferably is set to 2.2 mm to 3.0 mm, still more preferably is set to 2.4 mm to 2.8 mm.

In the present embodiment, the clearance CRt at the lift direction side edge part 52 of the wall surface 51 is 1.8 mm to 3.4 mm, in particular 2.6 mm. Therefore, it is possible to heighten the strength of disturbance occurring in the combustion chamber 7 at the maximum output power point.

On the other hand, from the viewpoint of keeping the intake gas from flowing in the reverse tumble direction when the lift amount of the intake valve 21 falls, the clearance CRb at the opposite lift direction side edge part 53 of the wall surface 51 is preferred to be small. Therefore, the clearance CRb at the opposite lift direction side edge part 53 of the wall surface 51 is, at least, preferably less than 1.8 mm which is the minimum value of the clearance CRt at the lift direction side edge part 52 of the wall surface 51. As explained above, in the present embodiment, the clearance CRb at the opposite lift direction side edge part 53 of the wall surface 51 is less than 1.8 mm. Therefore, it is possible to effectively keep the intake gas from flowing in the reverse tumble direction when the lift amount of the intake valve 21 is falling.

If changing the perspective, in an internal combustion engine 1 of the above specifications where the engine speed is 5600 rpm and the supercharging pressure is 200 kPa at the maximum output power point, the clearance CRt at the lift direction side edge part 52 of the wall surface 51 is preferably set to equal to or greater than -0.8 mm from the clearance CRm of the wall surface 51 where the strength of disturbance at the maximum output power point is maximum (that is, 2.6 mm), more preferably is set to equal to or greater than -0.4 mm therefrom, further preferably is set to equal to or greater than -0.2 mm therefrom. Further, in such an internal combustion engine 1, the clearance CRb at the opposite lift direction side edge part 53 of the wall surface 51 is preferably set to less than -0.8 mm from the clearance CRm of the wall surface 51 where the strength of disturbance at the maximum output power point is maximum (that is, 2.6 mm).

In this regard, the strength of disturbance u' generated in a combustion chamber 7 in the vicinity of compression top dead center at the maximum output power point can be approximated by the following formula (3) by analysis using the response surface methodology:

$$\text{u}' = a \cdot NE + b \cdot IVA + c \cdot LF + d \cdot \varepsilon + e \cdot IVC + f \cdot CR + g \cdot NE \cdot IVA + h \cdot NE \cdot CR + i \cdot Pm \cdot TTR + j \cdot Pm \cdot CR + k \cdot IVA \cdot IVC + l \cdot \varepsilon^2 + m \cdot IVC^2 + n \cdot CR^2 \quad \dots(3)$$

Here, NE indicates the engine rotational speed (rpm), IVA the operating angle of the intake valve 21 (°), LF the maximum lift amount (mm) of the intake valve 21, $\varepsilon$ the compression ratio, IVC the closing timing of the intake valve (°ABDC), CR the clearance (mm) of the wall surface 51 from the passage surface of the edge part of the intake valve 21, TTR the value changing according to the shape of intake port 11, and Pm the pressure (kPa) in the intake passage. Further, "a" to "n" are constants. In particular, h=0.0000788, j=-0.003585, and n=-0.0621023.

Here, if modifying the formula (3), the strength of disturbance u' generated in the combustion chamber 7 can be expressed by the following formula (4):

$$\text{u}' = n \left( CR + \frac{h \cdot NE + j \cdot Pm + f}{2n} \right)^2 - n \frac{(h \cdot NE + j \cdot Pm + f)}{2n} + \cdots \quad \cdots(4)$$

In the formula (4), "n" is a negative constant, and therefore it will be understood that the strength of disturbance u' generated in the combustion chamber 7 is expressed as a quadratic function projecting upward with respect to the clearance CR. Further, from formula (4), the clearance CRm where the strength of disturbance u' generated in the combustion chamber 7 becomes maximum is expressed by the following formula (5):

$$CR = -\frac{h \cdot NE + j \cdot Pm + f}{2n} \quad \cdots(5)$$

From the above formula (5), it will be understood that the higher the engine rotational speed NE at the operating state where the output power of the internal combustion engine is maximum, the greater the clearance CR at which the strength of disturbance u' is maximum. Similarly, from formula (5), it will be understood that the higher the pressure Pm in the intake passage at the operating state where the output power of the internal combustion engine is maximum, the smaller the clearance CR at which the strength of disturbance u' is maximum.

In the present embodiment, at a cylinder 15 in the group of suspended cylinders, the clearance CRt at the lift direction side edge part 52 of the wall surface 51 may be set to equal to or greater than -0.8 mm with respect to the thus calculated clearance CRm of the wall surface 51 where the strength of disturbance at the maximum output power point is maximum. Moreover, the clearance CRt at the lift direction side edge part 52 of the wall surface may be set to less than -0.8mm with respect to the clearance CRm. Due to this, the strength of disturbance at the maximum output power point can be large.

In this regard, in many internal combustion engines provided with superchargers used in commercially sold vehicles, the output power of an internal combustion engine where the engine rotational speed is 5500 to 6200 rpm in range and the pressure in the intake pipe is 200 to 240 kPa in range becomes the maximum. In this range of engine rotational speed and range of pressure in the intake pipe, the clearance CR where the strength of disturbance u' is maximum is about 1.8 mm to about 3.4 mm if calculated by the above formula (5). Therefore, from such a viewpoint as well, in a cylinder 15 of the group of suspended cylinders, the clearance CRt at the lift direction side edge part 52 of the wall surface 51 is preferably 1.8 mm to 3.4 mm. As explained above, in the present embodiment, in a cylinder 15 of the group of suspended cylinders, the clearance CRt at the lift direction side edge part 52 of the wall surface 51 is 1.8 mm to 3.4 mm, and therefore the strength of disturbance can be a large in an operating state where the output power of the internal combustion engine is maximum.

Second Embodiment

Next, referring to FIG. 7, an internal combustion engine according to a second embodiment will be explained. The configuration of the internal combustion engine according to the second embodiment is basically similar to the configuration of the internal combustion engine according to the first embodiment. Below, the parts differing from the internal combustion engine according to the first embodiment will be primarily explained.

FIG. 7 is an enlarged cross-sectional view similar to FIG. 3 showing the vicinity of the intake opening enlarged. In the present embodiment as well, the cylinder head 3 is provided with a mask part 50 provided at an opposite exhaust opening side of the intake opening 13. The mask part 50 has a wall surface 51 extending along the outer periphery of the intake opening 13 and along the outer edge of the intake seat part 15 around the intake opening 13.

Further, in the present embodiment as well, the wall surface 51 of the mask part 50 is formed so that the clearance CR from the passage surface of the edge part of the intake valve 21 changes in the lift direction of the intake valve 21. Further, the wall surface 51 is formed so that the clearance CRt at the lift direction side edge part 52 is larger than the clearance CRb at the opposite lift direction side edge part 53. In the present embodiment as well, for example, the clearance CRt at the lift direction side edge part 52 is 2.6 mm, while the clearance CRb at the opposite lift direction side edge part 53 is 1.0 mm.

In particular, in the present embodiment, the entire wall surface 51 is formed in a tapered shape so that the clearance CR gradually becomes larger toward the lift direction of the intake valve 21. That is, the wall surface 51 is formed in a tapered shape having a constant angle with respect to the lift direction of the intake valve 21 (axial direction). Note that, the angle at this time is smaller than the angle of the abutting surface of the intake seat part 15 with respect to the lift direction of the intake valve 21 (axial direction).

According to the present embodiment, by forming the entire wall surface 51 of the mask part 50 into a tapered shape as explained above, in the same way as the internal combustion engine of the first embodiment, it is possible to heighten the strength of the disturbance in the operating state where the output of the internal combustion engine is maximum.

Note that, in the present embodiment as well, if the clearance CRb at the opposite lift direction side edge part 53 of the wall surface 51 is less than 1.8 mm and the clearance CRt at the lift direction side edge part 52 of the wall surface 51 is equal to or greater than 1.8 mm, the clearances CRb and CRt may be values different from the above.

Third Embodiment

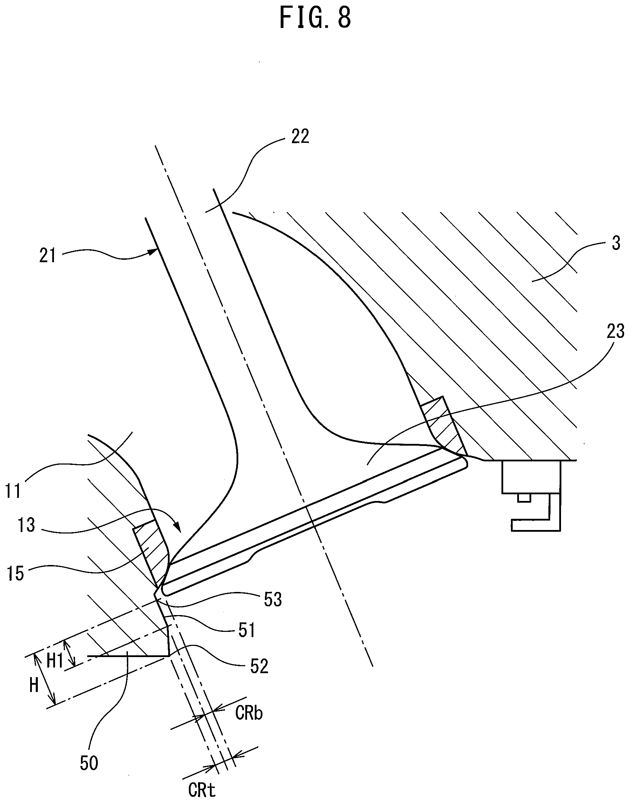

Next, referring to FIG. 8, an internal combustion engine according to a third embodiment will be explained. The configuration of the internal combustion engine according to the third embodiment is basically similar to the configurations of the internal combustion engines according to the first and second embodiments. Below, the parts differing from the internal combustion engines according to the first and second embodiments will be primarily explained.

FIG. 8 is an enlarged cross-sectional view similar to FIG. 3 which shows the vicinity of the intake opening enlarged. In the present embodiment as well, the cylinder head 3 is provided with a mask part 50 at the intake opening 13 at the side opposite to the exhaust opening. The mask part 50 has a wall surface 51 extending along the outer periphery of the intake opening 13 and along the outer edge of the intake seat part 15 around the intake opening 13.

Further, in the present embodiment as well, the wall surface 51 of the mask part 50 is formed so that the clearance CR from the passage surface of the edge part of the intake valve 21 changes in the lift direction of the intake valve 21. Further, the wall surface 51 is formed so that the clearance CRt at the lift direction side edge part 52 is larger than the clearance CRb at the opposite lift direction side edge part 53. In the present embodiment as well, for example, the clearance CRt at lift direction side edge part 52 is 2.6 mm, while the clearance CRb at the opposite lift direction side edge part 53 is 1.0 mm.

In particular, in the present embodiment, the wall surface 51 is formed so as to extend in parallel with the axis of the intake valve 21 at a region in the opposite lift direction side of of the intake valve 21, and is formed in a tapered shape so that the clearance CR gradually becomes larger toward the lift direction of the intake valve 21 at the remaining region in the lift direction side of the intake valve 21.

In the example shown in FIG. 8, from the opposite lift direction side edge part 53 to half or so (HI) of the height H of the wall surface 51, the wall surface 51 is formed so that the clearance CR is maintained constant at a relatively small value CRb. On the other hand, if the height from the opposite lift direction side edge part 53 exceeds HI, the wall surface 51 is formed into a tapered shape having a constant angle with respect to the lift direction of the intake valve 21 (axial direction). Note that, the angle at this time is smaller than the angle of the abutting surface of the intake seat part 15 with respect to the lift direction of the intake valve 21 (axial direction).

Note that, in the present embodiment as well, if the clearance CRb at the opposite lift direction side edge part 53 of the wall surface 51 is less than 1.8 mm and the clearance CRt at the lift direction side edge part 52 of the wall surface 51 is equal to or greater than 1.8 mm, the clearances CRb and CRt may also be values different from the above.

Summary

From the above, in the first to third embodiments, the wall surface 51 of the mask part 50 is formed so that the clearance CRt from the passage surface of the edge part of the intake valve 21 at the lift direction side edge part 52 of the intake valve 21 is larger than the clearance CRb from the passage surface of the edge part of the intake valve 21 at the opposite lift direction side edge part 53 of the intake valve 21. Further, between the lift direction side edge part 52 and the opposite lift direction side edge part 53, the wall surface 51 of the mask part 50 is formed so that the clearance CR is a clearance between the clearance CRt at the lift direction side edge part 52 and the clearance CRb at the opposite lift direction side edge part 53.

**Claims**

1. An internal combustion engine comprising:

   an intake opening (13) facing a combustion chamber (7) and opened and closed by an intake valve (21);
   an exhaust opening (14) facing the combustion chamber (7) and opened and closed by an exhaust valve (31); and
   a mask part (50) having a wall surface (51) extending toward the inside of the combustion chamber (7) along an outer periphery of the intake opening (13) at an opposite side from the exhaust opening (14) side in the direction extending through the center of an entire of the intake opening (13) and the center of an entire of the exhaust opening (14),
   wherein the wall surface (51) of the mask part (50) is formed so that a clearance (CRt) from a passage surface of an edge part of the intake valve (21) at an edge part (52) of the wall surface (51) at the lift direction side of the intake valve (21) is greater than the clearance (CRb) at the edge part (53) of the wall surface (51) at the opposite lift direction side of the intake valve (21), and so that between the edge part (52) of the wall surface (51) at the lift direction side and the edge part (53) of the wall surface (51) at the opposite lift direction side, the clearance is a value between the clearance (CRt) at the edge part (52) at the lift direction side and the clearance (CRb) at the edge part (53) at the opposite lift direction side.

2. The internal combustion engine according to claim 1, wherein the wall surface (51) is, at least at part at the axial direction of the intake valve (21), formed in a tapered shape where the clearance becomes gradually larger toward the lift direction of the intake valve (21).

3. The internal combustion engine according to claim 2, wherein the wall surface (51) is formed so as to extend in parallel with an axis of the intake valve (21) at part of a region in the opposite lift direction side of the intake valve (21) and is formed in a tapered shape so that the clearance becomes gradually greater toward the lift direction of the intake valve (21) at the remaining region in the lift direction side of the intake valve (21).

4. The internal combustion engine according to claim 1, wherein the wall surface (51) is formed so that the clearance becomes larger in a step-wise manner toward the lift direction of the intake valve (21).

5. The internal combustion engine according to any one of claims 1 to 4, further comprising a cylinder head (3) in which the intake opening (13), the exhaust opening (14), and the mask part (50) are formed, and wherein the edge part (52) of the wall surface (51) the furthest at the lift direction side of the intake valve (21) is positioned on a surface (A) of the cylinder head (3) abutting against a cylinder block (2).

6. The internal combustion engine according to any one of claims 1 to 5, wherein the wall surface (51) is formed so that the clearance is constant in the circumferential direction at different positions in the lift direction of the intake valve (21).

7. The internal combustion engine according to any one of claims 1 to 6, wherein at the wall surface (51), the clearance (CRt) at the edge part (52) of the lift direction side of the intake valve (21) is equal to or greater than 1.8 mm, and the clearance (CRb) at the edge part (53) of the opposite lift direction of the intake valve (21) is less than 1.8 mm.

8. The internal combustion engine according to any one of claims 1 to 6, wherein
   the wall surface (51) is configured so that the clearance (CRt) at the edge part (52) at the lift direction side of the intake valve (21) is equal to or greater than Cl calculated by the following formula (1), and the clearance (CRb) at the edge part (53) at the opposite lift direction of the intake valve (21) is less than Cl calculated by the following

formula (1):

$$Cl = -(h \cdot NEm + j \cdot Pmm + f)/2n - 0.8 \qquad \ldots (1)$$

in which formula (1), NEm is a rotational speed (rpm) at a maximum output power point, Pmm is an internal cylinder pressure (kPa) at the maximum output power point, h=0.0000788, j=-0.003585, f=0.6531914, and n=-0.0621023.

# FIG. 1

# FIG. 2

# FIG. 3

# FIG. 4

NO MASK

- - - - - CLEARANCE 1.0mm

-·-·-·- CLEARANCE 1.8mm

TUMBLE RATIO

LIFT AMOUNT (mm)

360    270    H    180    90    0

CRANK ANGLE (BTDC)

FIG. 5A

NO MASK

FIG. 5B

CLEARANCE 1.8mm

FIG. 5C

CLEARANCE 1.0mm

# FIG. 6

# FIG. 7

# FIG. 8

Europäisches
Patentamt

European
Patent Office

Office européen
des brevets

**EUROPEAN SEARCH REPORT**

Application Number

EP 19 16 7403

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 103 26 054 A1 (AUDI AG [DE]) 13 January 2005 (2005-01-13) * paragraphs [0020] - [0025]; figures * ----- | 1,2 | INV. F01L3/06 F02F1/24 F02F1/42 |
| X | EP 0 724 072 A1 (TOYOTA MOTOR CO LTD [JP]) 31 July 1996 (1996-07-31) * column 5, line 52 - column 6, line 30; figures 4,5 * ----- | 1-6 | |
| X | US 2006/266328 A1 (YOSHIKAWA SATOSHI [JP]) 30 November 2006 (2006-11-30) * paragraphs [0044] - [0073]; figures * ----- | 1 | |
| A | US 6 009 861 A (KREUTER PETER [DE]) 4 January 2000 (2000-01-04) * the whole document * ----- | 1 | |
| A | FR 2 836 180 A1 (RENAULT [FR]) 22 August 2003 (2003-08-22) * the whole document * ----- | 1 | |
| A | US 5 797 368 A (KREUTER PETER [DE] ET AL) 25 August 1998 (1998-08-25) * the whole document * ----- | 1 | TECHNICAL FIELDS SEARCHED (IPC) F01L F02F |

The present search report has been drawn up for all claims

| Place of search | Date of completion of the search | Examiner |
|---|---|---|
| The Hague | 2 August 2019 | Klinger, Thierry |

EPO FORM 1503 03.82 (P04C01)

## ANNEX TO THE EUROPEAN SEARCH REPORT
## ON EUROPEAN PATENT APPLICATION NO.

EP 19 16 7403

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2019

| Patent document cited in search report | | Publication date | Patent family member(s) | | Publication date |
|---|---|---|---|---|---|
| DE 10326054 | A1 | 13-01-2005 | NONE | | |
| EP 0724072 | A1 | 31-07-1996 | DE | 69600194 D1 | 30-04-1998 |
| | | | DE | 69600194 T2 | 06-08-1998 |
| | | | EP | 0724072 A1 | 31-07-1996 |
| | | | JP | H08200075 A | 06-08-1996 |
| | | | US | 5649513 A | 22-07-1997 |
| US 2006266328 | A1 | 30-11-2006 | CN | 1869417 A | 29-11-2006 |
| | | | JP | 4556771 B2 | 06-10-2010 |
| | | | JP | 2006329131 A | 07-12-2006 |
| | | | US | 2006266328 A1 | 30-11-2006 |
| US 6009861 | A | 04-01-2000 | DE | 19635886 A1 | 05-03-1998 |
| | | | GB | 2317644 A | 01-04-1998 |
| | | | JP | H1089077 A | 07-04-1998 |
| | | | US | 6009861 A | 04-01-2000 |
| FR 2836180 | A1 | 22-08-2003 | NONE | | |
| US 5797368 | A | 25-08-1998 | DE | 19535147 A1 | 27-03-1997 |
| | | | EP | 0764770 A2 | 26-03-1997 |
| | | | JP | H09112284 A | 28-04-1997 |
| | | | US | 5797368 A | 25-08-1998 |

EPO FORM P0459

For more details about this annex : see Official Journal of the European Patent Office, No. 12/82

**EP 3 557 012 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011132833 A

- JP S63113117 A